# EUROPEAN PATENT APPLICATION

(11) **EP 4 772 317 A1**
(43) Date of publication of application: **08.07.2026**
(21) Application number: 24880195.3
(22) Date of filing: 18.10.2024
(51) Int. Cl.: B26D 7/26, B26D 1/15, B26D 5/08, B26D 5/24, H01M 4/04

(54) **TRIMMING DEVICE AND METHOD**

(30) Priority: 21.10.2023 KR 20230141594
(71) Applicant: LG Energy Solution, Ltd., Seoul 07335 (KR)
(72) Inventor: SHIN, Woo Chang, Daejeon 34122 (KR)
(74) Representative: Goddar, Heinz J.
(86) International application number: PCT/KR2024/015901
(87) International publication number: WO 2025/084858

(57) **Abstract**

The present invention relates to a trimming device for making the width of an active material layer uniform in an electrode in which an electrode current collector is coated with the active material layer, and more specifically, to a trimming device which can be flexibly used by precisely adjusting a cutting depth and a cutting position. According to an embodiment of the present invention, it is possible to provide a trimming device for cutting the edges of an active material layer to make the width of the active material layer uniform in an electrode in which an electrode current collector is coated with the active material layer, the trimming device comprising: a guide roll for transporting the electrode; a cutting module including a knife for cutting the edges of the active material layer above the guide roll and the electrode in the direction in which the electrode is transported by the guide roll, and an adjustment member for adjusting the gap between the tip of the knife and the guide roll; and a horizontal frame which is disposed above the guide roll and to which the cutting module is mounted.

## Description

### Technical Field

The present invention relates to a trimming device making a width of an active material layer uniform in an electrode in which an active material layer is coated on an electrode current collector, which relates to a trimming device and a trimming method, which are flexibly usable by precisely adjusting a cutting depth and a cutting position.

This application claims the benefit of priority based on Korean Patent Application No. 10-2023-0141594 dated October 21, 2023, the disclosure of which is incorporated herein by reference in its entirety.

### Background Art

Recently, the demand for secondary batteries as an energy source has increased rapidly. Particularly, the distribution of lithium secondary batteries is very active. Lithium secondary batteries have characteristics of high energy density and voltage, long cycle life, and low discharge rate compared to other secondary batteries.

The secondary battery includes an electrode assembly, and a case surrounding the same. Depending on the shape of the case, it is generally provided in a cylindrical, rectangular, or pouch shape. The electrode assembly is manufactured in a form that a positive electrode, a separator, and a negative electrode are laminated, where the positive electrode and the negative electrode are manufactured by coating and drying a positive electrode active material slurry and a negative electrode active material slurry on current collectors made of aluminum foil and copper foil, respectively.

Depending on the distribution amount of the positive electrode active material or the negative electrode active material, a difference in electron density may occur, which is related to the performance of the secondary battery. Therefore, it is necessary to very precisely manage the thickness of the positive electrode active material or the negative electrode active material when manufacturing the positive electrode and the negative electrode. In addition, it is necessary to precisely manage the outermost shell, that is, the edge of the coating layer of the positive electrode active material or the negative electrode active material. That is, it is important to exhibit an optimal energy efficiency by uniformly managing the edge portion.

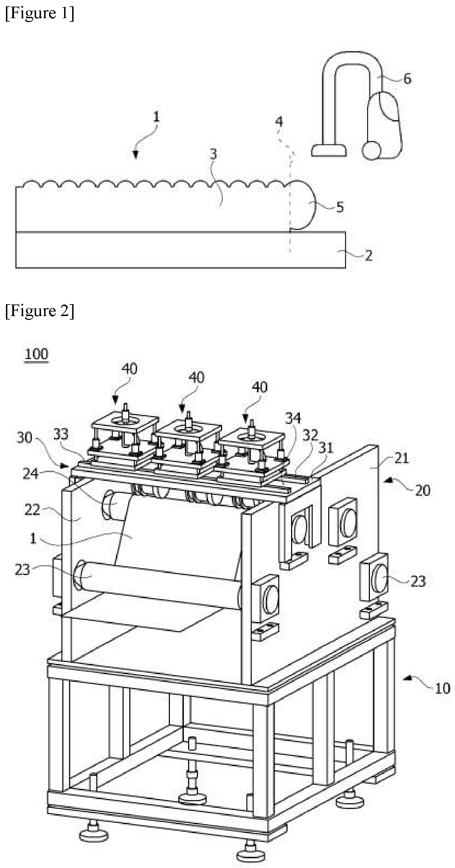

Figure 1 illustrates one example of an electrode (1) in which an active material coating layer (3) is formed on a current collector (2). The electrode (1) may be a positive electrode or negative electrode.

As shown, an edge residue (5) may be formed beyond an optimal edge line (4). The edge or edge line refers to a boundary between a coated portion (portion where a coating layer of an active material is formed) and a noncoated portion (portion where a coating layer of an active material is not formed) in the electrode. The edge residue (5) is a layer coated to a position beyond the edge line (4), which is not in close contact with the current collector (2), as shown, or does not satisfy the coating layer thickness as required precisely. The edge residue (5) can be regarded as a portion inevitably generated to secure a precise coating layer thickness up to the edge line (4).

The width of the coating layer of the active material must be precisely managed through the edge line, and thus, the edge residue (5) beyond the edge line (4) must be appropriately removed.

However, conventionally, the removal of the edge residue (5) was generally performed manually by a worker. The worker placed a tool such as a vacuum cleaner (6) on the electrode surface, and then removed the edge residue.

Therefore, it was not easy to remove the edge residue (5) while precisely maintaining the edge line (4). Particularly, the residue (5) removal was manually performed, whereby there was a problem that efficient electrode manufacturing was not performed.

### Disclosure

### Technical Problem

The present invention is intended to solve a problem related to edge residue removal from an electrode during conventional electrode processes.

Through one example of the present invention, it is intended to provide a trimming device and a trimming method, capable of precisely adjusting a trimming position through a cutting module and expanding a position range that can be trimmed.

Through one example of the present invention, it is intended to provide a trimming device and a trimming method, capable of precisely adjusting and confirming a trimming depth through a cutting module.

Through one example of the present invention, it is intended to provide a trimming device and a trimming method, capable of performing trimming on an electrode having a plurality of active material layers with a noncoated portion in the middle as well as a single active material layer.

Through one example of the present invention, it is intended to provide a trimming device and a trimming method, capable of perform trimming by positioning a knife in a cutting module to be biased to one side, and mounting the cutting module in a first mounting posture and a second mounting posture having shapes inverted from each other by 180 degrees to correspond to variations in a width of an active material layer and a width of a noncoated portion.

### Technical Solution

To achieve the above-described objects, according to one example of the present invention, it is possible to provide a trimming device cutting an edge of an active material layer in an electrode in which the active material layer is coated on an electrode current collector.

With respect to the trimming device, the trimming device may be provided, which comprises: a guide roll transferring the electrode; a cutting module including a knife cutting the edge of the active material layer on the upper portion of the guide roll and the electrode in the transfer direction of the electrode, and an adjustment member adjusting a gap between the terminal of the knife and the guide roll; and a horizontal frame provided on the upper portion of the guide roll and on which the cutting module is mounted.

The guide roll may be provided in a plurality of guide rolls, and one guide roll thereof may be referred to as a trimming roll supporting the electrode on which trimming is performed.

The cutting module may be provided to be movable in the longitudinal direction of the horizontal frame, that is, in the longitudinal direction of the guide roll, and may be fixed on the horizontal frame after the trimming position is determined.

The trimming device may comprise a lower frame supporting the trimming device with respect to the ground, and an upper frame supporting the guide roll and the horizontal frame above the lower frame.

It is preferable that the upper frame comprises a pair of vertical frames provided to face each other, and the guide roll and the horizontal frame are supported between the pair of vertical frames.

The horizontal frame may be fixed across the upper ends of the pair of vertical frames.

It is preferable that an opening penetrated up and down in a form parallel to the guide roll is formed in the horizontal frame, and the cutting module is supported on the horizontal frame after the knife penetrates the opening from the upper portion to the lower portion.

That is, it is preferable that a part of the cutting module is positioned on the upper portion of the horizontal frame, and the remaining part is positioned on the lower portion of the horizontal frame. Then, some components provided in the middle part of the cutting module may be fixedly coupled to the horizontal frame.

It is preferable that a pair of guide rails provided in a direction parallel to the guide roll in the front and rear of the opening, and a moving block provided to be capable of sliding movement and fixation along the guide rail are provided in the horizontal frame.

It is preferable that the cutting module is fixedly coupled to the moving block, thereby being capable of movement and fixation in the rotation axis direction of the guide roll together with the moving block integrally.

The cutting module may be provided as one module integrally, and the trimming position may be determined through the integral movement and fixation of the moving block.

It is preferable that the cutting module comprises a lower plate fixed on the horizontal frame; an upper plate provided on the upper portion of the lower plate; and a moving plate provided between the lower plate and the upper plate and provided to be movable up and down between the lower plate and the upper plate.

It is preferable that the knife is moved up and down together with the moving plate integrally. The moving plate may be provided to be capable of up-and-down movement and fixation, and a trimming depth may vary as a height of the moving plate varies.

A plurality of support columns supporting the upper plate in parallel with respect to the lower plate may be provided.

In addition, a guide member fixedly provided on the upper and lower portions of the moving plate, and thus guiding the up-and-down movement of the moving plate along the support columns penetrating the moving plate may be provided.

The cutting module may comprise a knife fixing member coupled to the moving plate and penetrating the lower plate to extend vertically downward toward the guide roll.

It is preferable that the knife is mounted on one side of the knife fixing member, and a motor causing rotation drive of the knife is mounted on the other side of the knife fixing member.

It is preferable that front-back widths of the knife fixing member and the motor are smaller than the front-back widths of the opening of the horizontal frame. The knife may be formed in a disk shape, and its diameter is preferably smaller than the front-back widths of the opening of the horizontal frame. Through this, it is possible that the knife is inserted and coupled to the horizontal frame as a single unit with the cutting module. Therefore, the mounting of the cutting module becomes easy.

Meanwhile, the diameter of the knife may be changed. Therefore, the center of the knife is preferably located lower than the horizontal frame so that the replacement of the knife is easy.

It is preferable that the knife and the motor are placed inside a vertical projection domain of the lower plate. Therefore, after the knife and the motor are easily inserted into the opening of the horizontal frame, the lower plate may be coupled to the horizontal frame at the upper portion of the horizontal frame.

It is preferable that the knife is located to be biased to one side from a left-right center of the cutting module.

It is preferable that the lower plate is provided symmetrically with respect to a front-back center and a left-right center, and the terminal of the knife is located directly below the front-back center of the lower plate.

It is preferable that the cutting module is provided to be mountable on the horizontal frame in different mounting postures. That is, it is preferably mountable on the horizontal frame in a first mounting posture and a second mounting posture reversed from the first mounting posture by 180 degrees based on the vertical direction.

It is preferable that the rotation direction of the knife is changeable to be in directions opposite to each other in the first mounting posture and the second mounting posture.

It is preferable that the adjustment member is provided to adjust the gap between the terminal of the knife and the guide roll by adjusting the height of the moving plate with respect to the lower plate.

It is preferable that the adjustment member is a micro gauge including a main body fixedly coupled to the moving plate forming a reference surface; and a measuring rod provided to be movable up and down by penetrating the moving plate in the main body.

It is preferable that the adjustment member comprises a lever positioned between the upper plate and the moving plate and rotatably provided with respect to the main body, thereby adjusting an elevating length of the measuring rod.

It is preferable that the trimming device comprises a displacement sensor (LVDT) sensing the gap between the terminal of the knife and the guide roll using a position of a gauge head located on the same height and the same line as the terminal of the knife as a reference point.

The displacement sensor may be fixedly coupled to the moving plate through a sensor bracket.

To achieve the above-described objects, according to one example of the present invention, a trimming device may be provided, which comprises a pair of vertical frames; a trimming roll rotatably provided between the pair of vertical frames, transferring an electrode, and supporting the electrode on which a trimming process is performed; a horizontal frame provided to be fixed between the pair of vertical frames above the trimming roll and having an opening corresponding to the longitudinal direction of the trimming roll; a moving block provided to be capable of sliding movement and fixation in the longitudinal direction of the trimming roll in the front and rear of the opening; and a cutting module performing the trimming process by cutting an edge of an active material layer of the electrode.

The cutting module may comprise: a lower plate mounted and fixed on the moving block above the moving block; a moving plate provided above the lower plate; a knife fixing member provided on the moving plate and penetrating the lower plate and the opening by extending downward; a knife mounted on the knife fixing member, and thus cutting the edge of the active material layer of the electrode in the vertically upper portion of the electrode; and an adjustment member adjusting a gap between the terminal of the knife and the trimming roll by adjusting a gap between the moving plate and the lower plate.

To achieve the above-described objects, according to one example of the present invention, a trimming method for performing trimming on a trimming line through a trimming device including a cutting module and a trimming roll may be provided, which is characterized by comprising: a preparation step of positioning an electrode, on which the trimming is performed, between the trimming roll and the cutting module; an indication step of indicating a trimming position using a laser point; a transfer step of continuously transferring the electrode while the trimming roll rotates; and a trimming step of cutting an edge of an active material layer in the electrode by rotating a knife of the cutting module simultaneously with the transfer step, wherein an adjustment step of feeding back a trimming depth in the trimming step to vary the trimming depth is performed.

The cutting module may comprise: a lower plate provided on the upper portion of the trimming roll and provided on a horizontal frame on which the cutting module is mounted; an upper plate provided on the upper portion of the lower plate; and a moving plate provided between the lower plate and the upper plate, and provided to be movable up and down between the lower plate and the upper plate, and the knife may be provided to be movable up and down together with the moving plate integrally.

The cutting module may comprise an adjustment member adjusting a gap between the terminal of the knife and a guide roll by adjusting a gap between the lower plate and the moving plate, and in the adjustment step, adjustment of the trimming depth may be performed through an operation of the adjustment member.

The cutting module may comprise a displacement sensor having a gauge head positioned on the same height and the same line as the terminal of the knife, and the fed-back trimming depth may be sensed through the displacement sensor.

An adjustment step of feeding back a trimming position in the trimming step to vary the trimming position may be performed.

The trimming device may comprise a position adjustment device adjusting the trimming position by moving the cutting module from side to side, and in the adjustment step, adjustment of the trimming position may be performed through an operation of the position adjustment device.

The trimming device may be provided to move a plurality of cutting modules from side to side as one assembly integrally. By performing movement of any one cutting module through the position adjustment device, the remaining cutting modules may also be moved integrally.

The fed-back trimming position may be sensed by a vision photographing the laser point. A laser pointer generating the laser point may be mounted on a knife housing protecting the knife. The laser point may be irradiated on a position immediately before trimming to intuitively indicate the trimming position.

### Advantageous Effects

Through one example of the present invention, it is possible to provide a trimming device and a trimming method, capable of precisely adjusting a trimming position through a cutting module and expanding a position range that can be trimmed.

Through one example of the present invention, it is possible to provide a trimming device and a trimming method, capable of precisely adjusting and confirming a trimming depth through a cutting module.

Through one example of the present invention, it is possible to provide a trimming device and a trimming method, capable of performing trimming on an electrode having a plurality of active material layers with a noncoated portion in the middle as well as a single active material layer.

Through one example of the present invention, it is possible to provide a trimming device and a trimming method, capable of perform trimming by positioning a knife in a cutting module to be biased to one side, and mounting the cutting module in a first mounting posture and a second mounting posture having shapes inverted from each other by 180 degrees to correspond to variations in a width of an active material layer and a width of a noncoated portion.

### Description of Drawings

Figure 1 briefly illustrates an appearance of trimming an edge line of an active material layer in a conventional electrode,
Figure 2 is a perspective diagram of a trimming device according to one example of the present invention,
Figure 3 is a front view of a trimming device according to one example of the present invention,
Figure 4 is a trimming point through a trimming device according to one example of the present invention, and an enlarged view thereof,
Figure 5 is a front view of a cutting module mounted on a horizontal frame,
Figure 6 is a perspective diagram of a cutting module,
Figure 7 is a plan view of a cutting module assembly composed of three cutting modules,
Figure 8 is a front view of a cutting module assembly, and
Figure 9 illustrates a flow of a trimming method according to one example of the present invention.

### Best Mode

Hereinafter, a trimming device according to one example of the present invention will be described in detail with reference to the attached drawings.

The trimming device can be regarded as a device removing, that is, trimming edge residues deviating from an edge line through a knife.

The trimming device according to the present example may be a device continuously or automatically cutting an edge of an active material on an electrode, whereby it may be a device forming a precise edge line or corner line.

To form a precise edge line, it is preferable that a knife should be precisely positioned on the edge line, and be also capable of cutting the edge residues with a precise cutting depth.

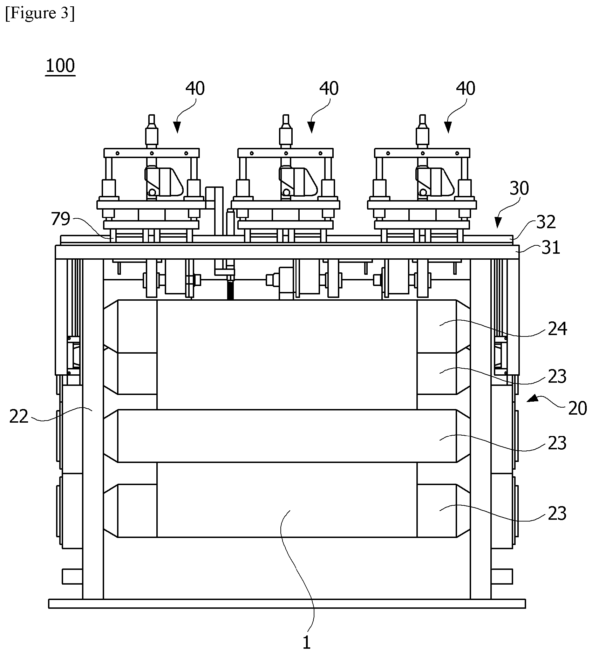

Figures 2 and 3 illustrate one example of a trimming device (100) according to the present example.

The electrode may be continuously supplied to the trimming device (100) through an electrode roll on which trimming is to be performed. That is, the electrode may be continuously supplied to the trimming device (100) through the electrode roll on which an active material is coated on a current collector roll, and the trimming device (100) may continuously perform trimming.

The trimming device (100) may comprise a cutting module (40) provided to cut an edge of an active material layer. The cutting module (40) may comprise a knife removing edge residues by cutting the edge by rotation. That is, the knife may remove only unnecessary edge residues while rotating vertically above the electrode to be transferred, thereby forming a precise edge line. To this end, it is preferable that the rotation axis of the knife is perpendicular to the transfer direction of the electrode.

Here, as the knife is positioned vertically with respect to the active material layer of the electrode, the cutting efficiency is the highest when cutting, but an angle of contact is not limited to verticality.

Specifically, the trimming device (100) comprises a guide roll (23, 24) transferring the electrode, through which the electrode (1) may be continuously supplied to the trimming device (100), and then discharged.

The guide roll (23, 24) is provided with a plurality of rolls, which performs transferring and supporting of the electrode as they rotate. The plurality of guide rolls (23, 24) is provided in parallel, but their heights and mounting positions may be different from each other.

Figures 2 and 3 illustrate one example in which a trimming device (100) is equipped with four guide rolls (23, 24), where trimming may be performed on any one guide roll (24). That is, the guide roll (24), which directly faces the knife and supports the electrode on which trimming is performed can be referred to as a trimming roll.

A process for manufacturing an electrode may be comprised of multiple processes, and the multiple processes may be performed organically and continuously.

As one example, a coating process, in which an active material is coated on a current collector while the roll is unrolled, may be performed on the current collector. Thereafter, the current collector, i.e., the electrode, on which the coating is completed, may be continuously supplied to a trimming device (100) to perform a trimming process. Thereafter, the trimmed electrode may be manufactured in the form of a unit electrode roll through a slitting process. That is, an electrode process may be continuously performed through roll-to-roll.

Here, the trimming device (100) according to one example of the present invention may be referred to as a device performing some processes, i.e., the trimming process, in the roll-to-roll process, and subsequent processes may also be performed continuously by continuously supplying electrodes and continuously discharging the electrodes after trimming.

The process of forming an electrode may be divided into a wet process and a dry process, where in the wet process, a drying process is performed after coating the active material. However, in the case of the dry process, the drying process may be omitted after coating the active material. Therefore, it is preferable that the trimming device according to the present example is a device performing a trimming process after coating an active material in the dry process. Particularly, it may be a device suitable for a dry process of a negative electrode.

Specifically, the trimming device (100) according to the present example may comprise a lower frame (10) and an upper frame (20). The lower frame (10) may be referred to as a frame supporting the trimming device (100) with respect to the ground. In addition, the lower frame (10) may be provided to support the upper frame (20).

The upper frame (20) may be provided to support the guide roll (23, 24). In addition, the upper frame (20) may be provided to support a horizontal frame (30) on which the cutting module (40) is mounted.

The upper frame (20) may comprise a pair of vertical frames (21, 22) provided to face each other. The guide roll (23, 24) and the horizontal frame (30) may be supported between the vertical frame (21) on one side and the vertical frame (22) on the other side. Of course, it is preferable that the horizontal frame (30) is positioned above the guide roll, especially, the gui de roll (24) used as the trimming roll.

The front and rear of the vertical frame (21) on one side and the vertical frame (22) on the other side are opened, where the electrode for trimming may be supplied through the rear and the trimmed electrode may be discharged through the front. This movement of the electrode may be achieved through rotation of the guide rolls (23, 24).

The horizontal frame (30) is provided on the upper portion of the upper frame (20), which may be fixed by extending from the vertical frame (21) on one side to the vertical frame (22) on the other side. That is, it is preferable that the horizontal frame (30) and the guide rolls (23, 24) are provided parallel to each other.

The horizontal frame (30) may comprise a horizontal base (31).

The horizontal base (31) may be formed so that two bars spaced apart from each other and arranged in a parallel manner. Alternatively, the horizontal base (31) is preferably formed in a single-body plate shape with an opening (34). The opening (34) may be formed to penetrate up and down, and may be formed long from side to side to be parallel to the guide rolls (23, 24). A part of the cutting module (40) may be allowed to penetrate from the top to the bottom through the opening (34). Particularly, it is preferable that the cutting module is supported on the horizontal frame after the knife of the cutting module penetrates the opening from the top to the bottom. That is, it is preferable that a part of the cutting module is positioned above the horizontal frame and the remaining part is positioned below the horizontal frame.

The front-back widths of the opening (34) may be formed so that only a part of the cutting module (40), i.e., the lower components, are capable of penetrating, and the left-right widths of the opening (34) may be formed to determine a range of mountable positions of the cutting module (40).

It is preferable that the horizontal frame (30) comprises a pair of guide rails (32, 33) provided in a direction parallel to the guide rolls (23, 24) in the front and rear of the opening. It is preferable that the guide rails (32, 33) are provided on the upper portion of the horizontal base (31). It is preferable that the cutting module (40) is subjected to sliding movement and fixation along the guide rails (32, 33). That is, it is preferable that the mounting and fixing position of the cutting module (40) may be changed. Through this, the trimming position may be precisely adjusted.

Specifically, the guide rail (32, 33) may be equipped with a moving block (79, see Figure 3), and the moving block (79) may be subjected to sliding movement and fixation along the guide rail (32, 33). In addition, the cutting module (40) may be coupled to the moving block. Therefore, the cutting module (40) may be subjected to movement and fixation along the movement and fixation of the moving block (79). That is, the mounting and fixing position of the cutting module (40) may be variable.

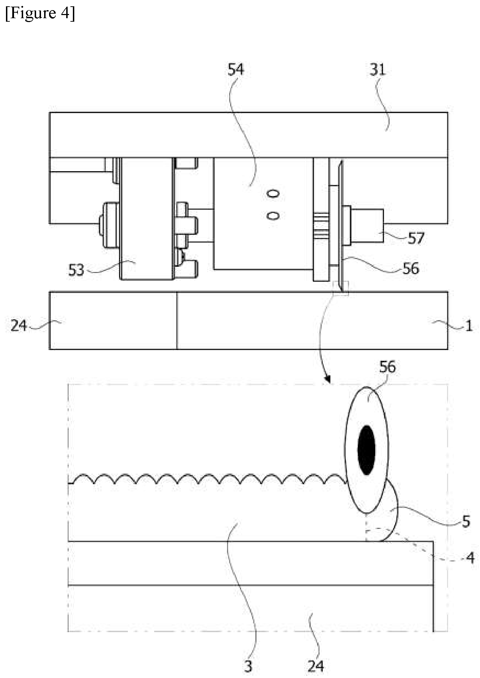

Figure 4 illustrates an appearance of trimming edge residues through a knife of a cutting module.

As illustrated, a knife (56) inserted into the lower portion of the horizontal frame (30) and protruding trims the edge residue (5) along a preset edge line while rotating, thereby forming an edge line (4).

As described above, the cutting module (40) may be fixed by moving from side to side on the horizontal frame (30). Therefore, through this, the knife may trim the residue (5) along the preset edge line. Here, a cutting depth of the knife is very important. If the cutting depth is deep, damage to the current collector (2) occurs, and if the cutting depth is shallow, it is difficult to properly trim the residue (5). Therefore, it is preferable that the cutting depth of the knife may be adjusted very precisely.

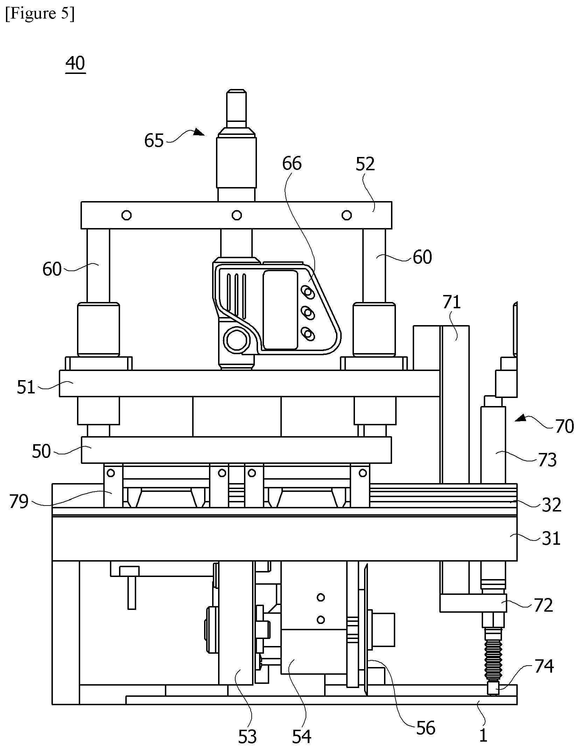

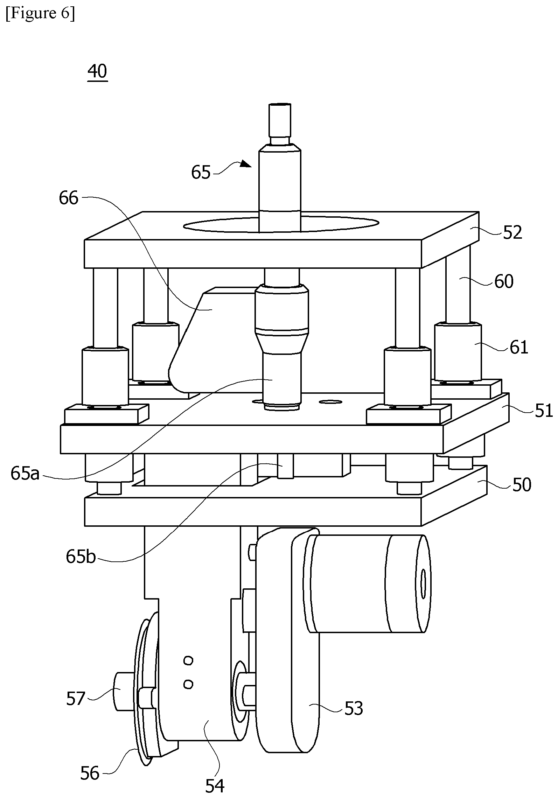

Hereinafter, the cutting module (40) will be described in more detail with reference to Figures 5 and 6.

Figure 5 illustrates an appearance that a cutting module (40) is mounted on a horizontal frame (30), and Figure 6 illustrates only a cutting module (40).

The cutting module (40) may be configured by comprising a lower plate (50), an upper plate (52), and a moving plate (51). The plates may have different sizes, but may all be formed in a rectangular or square shape. However, it is preferable that the plates are positioned parallel to each other, and such a parallel relationship is always maintained for precise trimming.

The lower plate (50) is provided to be fixed on the horizontal frame (30). That is, as the lower plate (50) is mounted and fixed on the horizontal frame, the cutting module (40) may be mounted and fixed on the trimming device (100).

The upper plate (52) may be provided on the upper portion of the lower plate, and a plurality of support columns (60) may be provided between both plates. That is, the upper plate (52) and the lower plate (50) may be connected integrally through the plurality of support columns. Therefore, the upper plate and the lower plate may maintain the same up-and-down interval, and may always maintain a parallel relationship.

The upper plate (52) and the lower plate (50) may be formed in a rectangular plate shape. Therefore, it is preferable that the plurality of support columns (60) is provided at the four corner portions, whereby the upper plate (52) and the lower plate (50) are firmly fixed. It is preferable that the upper plate (52) and the lower plate (50) have the same shape and size, and are provided to always face each other with the same interval.

It is preferable that a moving plate (52) is provided between the upper plate (51) and the lower plate (50). It is preferable that the upper plate (52) and the lower plate (50) are constitutions which are always fixed, whereas the moving plate (51) is a constitution provided to be movable.

The moving plate (51) may also be formed in a rectangular plate shape, and has preferably a size larger than those of the upper plate (52) and the lower plate (50) to prevent unintended movement. This is one constitution example for allowing the moving plate (51) to move up and down while maintaining a horizontal position with respect to the upper plate and the lower plate, which is to be easily capable of mounting guide members (61) to be described below.

It is preferable that the plurality of support columns (60) allows to penetrate the corner portions of the moving plate (51). It is preferable that a plurality of guide members (61) is provided to perform the intended elevating movement of the moving plate (51) precisely and uniformly.

The guide members (61) may be fixedly provided on the upper and lower portions of the moving plate (51). The support columns (60) may penetrate the guide members (61). Therefore, when the moving plate (51) moves up and down along the support columns, the entire moving plate (51), including the four corner portions, may move up and down uniformly. Here, the intended up-and-down movement of the moving plate (51) means adjustment of the cutting depth through the knife. That is, the up-and-down position adjustment of the moving plate (51) needs to be performed very precisely.

A knife fixing member (54) may be provided for mounting the knife (56). The knife fixing member (54) may be fixedly coupled to the moving plate (51), and may be provided to protrude downward. That is, it may be provided to extend downward further by penetrating the lower plate (50).

On one side of the knife fixing member (54), the knife (56) may be vertically mounted, and fixed through a fixing cap (57). Then, it is preferable that a motor is mounted on the other side of the knife fixing member (54).

As the motor (53) causing rotary drive of the knife (56) is positioned at the rear with interposing the knife fixing member (54), it is possible to lower the mass center of the cutting module (40). In addition, the motor (53) itself may perform a counterweight function upon cutting through the knife (56). Therefore, continuous trimming may be performed very stably.

Here, it is preferable that the motor is located approximately at the left-right center of the cutting module (40). Therefore, the knife fixing member (54) and the knife (56) may be located to be biased on one side from the left-right center of the cutting module (40). Figure 5 illustrates an appearance that the knife is located to be biased on the right side of the cutting module (40), and Figure 6 illustrates an appearance that the knife is located to be biased on the left side of the cutting module (40).

The upper limit of the width of the electrode capable of being trimmed by being introduced into a single trimming device (100) may be limited, but the width of the electrode capable of being trimmed below the upper limit may vary. Then, the width of the active material layer may also vary. This means that the position of the corner line or edge line of the active material layer may vary greatly.

Also, in one electrode, one active material layer may be provided, or multiple active material layers may be provided, based on the width. When one active material layer is provided, only both corner lines, that is, two cutting lines, may be provided. In this case, two cutting modules (40) may be mounted. When two active material layers are provided, two middle corner lines as well as both corner lines may be provided. That is, a noncoated portion may be provided in the middle of the electrode. In this case, four cutting modules (40) may be mounted. Of course, two corner lines may also be cut by mounting two knives on the central cutting module.

That is, the number of cutting modules (40) mounted on a single trimming device (100) may be changed, and accordingly, the position (position of the knife) and the number of cutting lines may be changed.

For this reason, it is preferable that the cutting module (40) is mountable on the horizontal frame (30) in two mounting postures. Figure 5 illustrates an appearance that a cutting module (40) is mounted on a horizontal frame (30) in a first mounting posture, and Figure 6 illustrates a cutting module (40) in a second mounting posture.

To enable these two mounting postures, it is preferable that the lower plate (50) is formed symmetrically with respect to the front-back center and symmetrically with respect to the left-right center. Then, it is preferable that the terminal of the knife is mounted to be located at the front-back center of the lower plate (50).

For example, when performing trimming of an electrode with a uncoated portion in the middle, it is preferable that the cutting module on the left side is mounted in the first mounting posture and the cutting module on the right side is mounted in the second mounting posture.

In addition, when the edge lines on both sides are located near both ends of the guide roll, it is preferable that the cutting module on the left side is mounted in the second mounting posture and the cutting module on the right side is mounted in the first mounting posture.

Through this, the position range of the cuttable cutting line can be greatly expanded, so that the trimming can be performed very flexibly in various electrodes.

As described above, the position of the knife (56) , i.e., the cutting depth, may be determined through the position adjustment of the moving plate (51). To this end, an adjustment member (65) for adjusting the height of the moving plate (51) may be provided. The adjustment member (65) may be provided to adjust the height of the moving plate with respect to the lower plate.

As the elongation interval, i.e., the height of the moving plate with respect to the fixed lower plate increases, the position of the knife rises. In this case, the cutting depth becomes shallower. In other words, the vertical interval between the guide roll (24) and the terminal of the knife becomes larger. Conversely, as the elongation interval, i.e., the height of the moving plate with respect to the fixed lower plate decreases, the position of the knife descends. In this case, the cutting depth becomes deeper. In other words, the vertical interval between the guide roll (24) and the terminal of the knife becomes narrower.

Since the cutting depth through the knife must be adjusted very precisely, the adjustment member (65) may be formed in the form of a micro gauge for measuring a precise depth.

Specifically, the adjustment member (65) may be configured by comprising a main body (65a) fixedly coupled to the moving plate forming a reference surface, and a measuring rod (65b) provided to be movable up and down by penetrating the moving plate (51) in the main body. That is, the protrusion length of the measuring rod (65b) from the reference surface may be referred to as the interval between the moving plate (51) and the lower plate (50).

As the protrusion length of the measuring rod (65b) increases, the measuring rod (65b) pushes the lower plate, and accordingly, the reference surface coupled with the main body (65a), that is, the moving plate (51), may rise. Thereafter, as the protrusion length of the measuring rod (65b) decreases, the moving plate (51) may descend. That is, the adjustment member (65) may adjust the cutting depth by increasing or decreasing the up-and-down interval between the lower plate and the moving plate.

The terminal of the measuring rod (65b) may be coupled with the lower plate (50). In this case, when the protrusion length of the measuring rod is shortened, the measuring rod pulls the lower plate, whereby the lower plate eventually descends. Meanwhile, the terminal of the measuring rod (65b) may be provided to simply contact the lower plate (50). In this case, as the protrusion length of the measuring rod is shortened, the contact between the measuring rod and the lower plate may be released, whereby force transmission becomes impossible. To solve this problem, elastic support may be performed between the lower plate and the moving plate, or elastic support may be performed between the moving plate and the upper plate.

The elastic support may be performed through a spring, and the spring may be mounted through the support column (60) or guide member (61) as described above.

As one example, the protrusion length of the measuring rod (65b) is lengthened, whereby the interval between the moving plate and the lower plate increases, and the interval between the moving plate and the upper plate decreases. At this time, the spring provided between the moving plate and the upper plate may be compressed. Afterwards, as the protrusion length of the measuring rod (65b) is shortened, the moving plate (51) may be moved downward, while the compressed spring is restored.

Meanwhile, it is preferable that the adjustment member (65) comprises a lever (66) for adjusting the protrusion length of the measuring rod (65b).

The lever (66) is provided to be rotatable with respect to the main body (65a), which may be provided to adjust the elevation length or protrusion length of the measuring rod (65b).

In the present example, the length adjustment of the measuring rod means not only simply moving the measuring rod, but also moving the knife and motor, and the like, as well as the moving plate (51). Therefore, it requires a force greater than knob adjustment in a general micro gauge. Therefore, in the present example, it is preferable that the lever protruding from the main body to one side is in a form coupled with the knob.

The measurement height may be displayed in the lever (66). As one example, if zero point is set to the position where the knife and the guide roll meet, the displayed number may be the distance between the guide roll and the terminal of the knife. If the zero point is set to the position where the current collector and the knife meet, the displayed number may be the distance between the knife and the current collector, i.e., the cutting depth. Therefore, it is possible to adjust the position of the knife very precisely.

Meanwhile, as described above, trimming of various electrodes may be performed in one trimming device. This means that the thickness of the current collector and the thickness of the active material layer may also be changed variously. Therefore, when the thickness of the current collector and the thickness of the active material layer are changed, the height of the knife accordingly needs to be changed precisely.

To this end, according to the present example, the cutting module (40) preferably comprises a displacement sensor (70, LVDT). The displacement sensor may be referred to as a sensor for measuring very precise linear displacement. The displacement sensor may sense displacement of a gauge head, i.e., linear displacement, as the gauge head (74) performs forward and backward movement in a state where the main body (73) is fixed. That is, an actual gap value between the knife and the guide roll may be measured.

Here, it is preferable that the gauge head (74) contact the guide roll directly above the guide roll. The contact angle is not necessarily limited to verticality, but the measurement error may be minimized through vertical contact. For this reason, it is also preferable that the knife performs trimming directly above the electrode. Through this, it is possible to measure an accurate gap value while increasing the trimming efficiency.

The main body (73) of the displacement sensor may be fixed on the moving plate (51). To this end, a vertical bracket (71) coupled to the moving plate and a sensor bracket (72) on which the main body is mounted and fixed may be provided.

The displacement sensor (70) may be provided by penetrating the horizontal frame (30) up and down, and the gauge head (74) provided at the lower end of the main body (73) may have a variable protrusion length relative to the main body (73). That is, the variable protrusion length may be sensed.

As one example, after the height of the gauge head (74) is set to zero point on the same height and the same line as the terminal of the knife, the gauge head (74) may be lowered to contact the guide roll (24) or a noncoated portion of an electrode base material. At this time, the sensed value may be accurately referred to as the gap value or cutting depth between the terminal of the knife and the guide roll.

The gap value required upon trimming may vary. That is, the cutting depth may vary. In this instance, the gap value of the electrode on which trimming is currently performed is predetermined. Therefore, to match the required gap value, the height of the knife may be adjusted, and a precision degree of the set gap value may be confirmed through the displacement sensor (70). That is, it is possible to set the cutting depth very precisely by changing the position of the knife through an adjustment means (65) and confirming the gap value between the knife terminal and the guide roll through the displacement sensor (70).

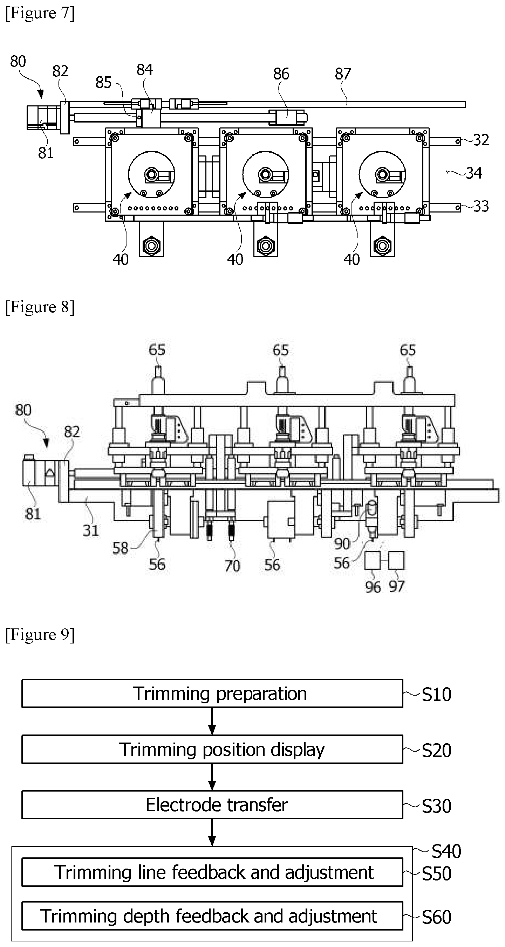

Hereinafter, a position adjustment mechanism of multiple cutting modules will be described in detail with reference to Figures 7 and 8.

Figure 7 is a plan view of a cutting module assembly, and Figure 8 is a front view of a cutting module assembly. Multiple cutting modules may be installed and handled as one assembly.

A case where trimming is performed through three cutting modules in an electrode having two rows of coated portions will be described. The number of coated portions and the number of cutting modules may be changed.

The width of the electrode on which trimming is performed, the widths of the noncoated portion and coated portion, the number of coated portions, and the trimming depth are preset. Therefore, unless the preset values are varied, the trimming position and trimming depth also do not vary. However, the position and depth where actual trimming should be performed may vary during the manufacturing process of the electrode or the transfer process of the electrode.

In the case of an electrode having coated portions in a plurality of rows or lanes, the number of edge lines increases, and thus the number of installed cutting modules also increases. In this case, it is not easy to individually set and adjust the positions, especially the left-right positions, of the respective cutting modules.

According to the present example, by configuring a plurality of cutting modules, for example, three cutting modules, as one module, it is possible to set the position.

As illustrated, the three cutting modules may be mounted on the horizontal base (31) in a state in close contact with each other from side to side. Particularly, they may be mounted on the guide rails (32, 33) to be capable of sliding.

The left-right widths of the cutting module may be preset, and the left-right positions of the knife mounted on the cutting module may also be preset.

Here, it is preferable to configure a plurality of cutting modules as a single cutting module assembly. That is, it is preferable that the modules can be handled as a single assembly and the left-right positions can be adjusted integrally. To this end, a position adjustment device (80) may be provided in the present example.

Here, the position adjustment device (80) may be a constitution for moving a plurality of cutting modules integrally as well as a constitution for forming a plurality of cutting modules into a single assembly.

The cutting modules themselves are in a state where they are physically or mechanically coupled from side to side, so that if only the left-right positions of one cutting module are changed, the left-right positions of all cutting modules, i.e., the assembly, may be changed. To this end, a connection block (84) may be provided on the rightmost or leftmost cutting module, and the left-right positions of the assembly may be changed while pushing or pulling the connection block. Meanwhile, the connection block (84) may be mounted on the lower plate of the cutting module. That is, the left-right positions of the cutting module may be changed while pushing or pulling the lower plate from side to side through the connection block. Through this, the cutting module may be stably moved.

Specifically, the position adjustment device (80) may comprise a rod (82) provided to be rotatable and a connection block (84) changing rotational displacement of the rod into linear displacement. Here, a drive part rotating the load may be provided, and manual drive or electromotive drive may be performed. A servo motor may be provided for electromotive drive.

More specifically, as the reference block (82) is provided on the horizontal base (31) and the rod extending from the reference block (82) rotates, it is possible to make the connection block (84) movable from side to side. When the rod rotates forward in the form of a ball screw, it is possible that the connection block moves to the right side, and when the rod rotates backward, it is possible that the connection block moves to the left side. The rotation of the rod may be performed through control of a servo motor (81), and the servo motor may be provided on the reference block (82).

Through the rotation control of the servo motor, left-right movement distances of the connection block may be controlled very precisely, and through this, the left-right positions of a plurality of cutting modules, i.e., the left-right positions of the entire assembly, may be precisely controlled.

In addition, the movement of the connection block (84) may be restricted through stoppers (85, 86). By making the connection block movable between the stoppers (85, 86) on both sides, it is possible to limit excessive movement of the connection block (84). The upper and lower limits in the movement range of the cutting modules may be easily set.

Meanwhile, a connection rail (87) may be provided on the horizontal base (31). The connection block (84) may be supported on the connection rail (87), and may be provided to be capable of sliding.

The electrode may be transferred with a slight deviation from side to side. Therefore, the edge line may also be slightly changed from side to side. In addition, when the cutting modules are installed initially, it is not easy to install the cutting modules by adjusting the left-right positions of the respective cutting modules. For this reason, the cutting modules may be integrally manufactured as an assembly and installed by adjusting the left-right positions, and it is also possible to automatically adjust the left-right positions of the assembly.

As illustrated in Figure 8, in the present example, a laser (90) may be provided as one example of an indication member for visually indicating the cutting position. The laser (90) may be positioned in front of the knife, thereby indicating the edge line. Therefore, it is possible to intuitively determine whether trimming is performed on the exact edge line.

The knife performs trimming through rotation. Therefore, a knife housing (58) for protecting the knife may be provided. The knife housing (58) may be provided to surround the knife, and only a part of the knife performing trimming may protrude from the knife housing. The laser (90) may be mounted on the knife housing. In addition, the laser (90) may be mounted only on the outermost knife housing, rather than multiple housings.

Hereinafter, a trimming method according to one example of the present invention will be described in detail with reference to Figure 9.

The cutting modules, i.e., the cutting module assembly, may be mounted to correspond to the left-right widths and edge lines of an electrode base material performing trimming. Afterwards, the electrode is inserted between the cutting module and the guide roll (24) used as the trimming roll, whereby trimming preparation (S10) may be completed. In this instance, it is preferable that a trimming point is visually displayed (S20) through the laser. Of course, the trimming point may be continuously displayed during performing the trimming. When there are multiple trimming positions, the trimming points may also be indicated through the laser at the respective trimming positions, but only the trimming point located at the outermost edge may be indicated. The trimming point may be indicated through a laser point.

The trimming (S40) may be performed simultaneously with the transfer of the electrode (S30). Therefore, it is desirable that trimming at an accurate trimming line or edge line and trimming at an accurate depth are maintained.

When the trimming preparation is completed, the trimming (S40) may be performed while the knife of the cutting module rotates, and simultaneously the electrode may be transferred (S30).

The trimming position may vary while the trimming is performed. That is, a deviation may occur between the trimming line on which the trimming has to be performed actually and the trimming line on which the trimming is currently performed. Such a deviation may be sensed through a vision (96). In other words, the deviation of the cutting position from side to side may occur, which may be sensed through the vision. It is preferable that a step of receiving feedback on the trimming line and adjusting it (S50) is performed in the trimming step. This adjustment step (S50) may also be performed manually or automatically.

When multiple cutting modules are mounted, it is not easy to individually adjust the trimming positions. Since the deviation of any one trimming position affects the deviations of other trimming positions wholly, it is preferable that trimming position adjustment for all cutting modules is performed collectively.

To this end, a position adjustment device (80) for integrally forming multiple cutting modules and moving them integrally may be provided, and multiple trimming lines may be collectively adjusted through manual or automatic operation of the position adjustment device.

In this instance, it is preferable that the position adjustment device adjusts the positions of the cutting module, i.e., the left-right positions of the cutting module, through the horizontal movement of the lower plate forming the reference surface of the cutting module.

Meanwhile, the trimming depth varies or needs to be adjusted while the trimming is performed. The trimming depth may be sensed in real time through the displacement sensor (70). In step (S60), the trimming depth sensed through the displacement sensor may be fed back, through which the trimming depth may be adjusted.

The feedback position and feedback depth, which are data to be fed back, are transmitted to a control device (97), where the feedback position and feedback depth may be automatically adjusted through the control device (97). Of course, the control device (97) may comprise a monitor, where through the monitor, the current trimming position and trimming depth may be displayed, and the errors of the trimming position and depth may be displayed.

An operator may manually adjust the trimming position and depth through the numerical values and notifications displayed on the monitor, and this adjustment may also be performed automatically.

### Industrial Applicability

It is described in the Detailed Description of Invention.

## Claims

1. A trimming method for performing trimming on a trimming line through a trimming device including a cutting module and a trimming roll, **characterized in that** the trimming method comprises:
a preparation step of positioning an electrode, on which the trimming is performed, between the trimming roll and the cutting module;
an indication step of indicating a trimming position using a laser point;
a transfer step of continuously transferring the electrode while the trimming roll rotates; and
a trimming step of cutting an edge of an active material layer in the electrode by rotating a knife of the cutting module simultaneously with the transfer step, wherein
an adjustment step of feeding back a trimming depth in the trimming step to vary the trimming depth is performed.

2. The trimming method according to claim 1, **characterized in that**
the cutting module comprises:
a lower plate provided on the upper portion of the trimming roll and provided on a horizontal frame on which the cutting module is mounted;
an upper plate provided on the upper portion of the lower plate; and
a moving plate provided between the lower plate and the upper plate, and provided to be movable up and down between the lower plate and the upper plate, and
the knife is provided to be movable up and down together with the moving plate integrally.

3. The trimming method according to claim 2, **characterized in that**
the cutting module comprises an adjustment member adjusting a gap between the terminal of the knife and a guide roll by adjusting a gap between the lower plate and the moving plate, and
in the adjustment step, adjustment of the trimming depth is performed through an operation of the adjustment member.

4. The trimming method according to claim 3, **characterized in that**
the cutting module comprises a displacement sensor having a gauge head positioned on the same height and the same line as the terminal of the knife, and
the fed-back trimming depth is sensed through the displacement sensor.

5. The trimming method according to any one of claims 1 to 4, **characterized in that**
an adjustment step of feeding back a trimming position in the trimming step to vary the trimming position is performed.

6. The trimming method according to claim 5, **characterized in that**
the trimming device comprises a position adjustment device adjusting the trimming position by moving the cutting module from side to side, and
in the adjustment step, adjustment of the trimming position is performed through an operation of the position adjustment device.

7. The trimming method according to claim 6, **characterized in that**
the fed-back trimming position is sensed by a vision photographing the laser point.

8. A trimming device cutting an edge of an active material layer in an electrode in which the active material layer is coated on an electrode current collector, **characterized in that** the trimming device comprises:
a guide roll transferring the electrode;
a cutting module including a knife cutting the edge of the active material layer on the upper portion of the guide roll and the electrode in the transfer direction of the electrode, and an adjustment member adjusting a gap between the terminal of the knife and the guide roll;
a horizontal frame provided on the upper portion of the guide roll and on which the cutting module is mounted;
a lower frame supporting the trimming device with respect to the ground; and
an upper frame supporting the guide roll and the horizontal frame above the lower frame, wherein
an opening penetrated up and down in a form parallel to the guide roll is formed in the horizontal frame, and the cutting module is supported on the horizontal frame after the knife penetrates the opening from the upper portion to the lower portion.

9. The trimming device according to claim 8, **characterized in that**
a pair of guide rails provided in a direction parallel to the guide roll in the front and rear of the opening, and a moving block provided to be capable of sliding movement and fixation along the guide rail are provided.

10. The trimming device according to claim 9, **characterized in that**
the cutting module is fixedly coupled to the moving block, thereby being capable of movement and fixation in the rotation axis direction of the guide roll together with the moving block integrally.

11. The trimming device according to claim 8, **characterized in that**
the cutting module comprises:
a lower plate fixed on the horizontal frame;
an upper plate provided on the upper portion of the lower plate; and
a moving plate provided between the lower plate and the upper plate and provided to be movable up and down between the lower plate and the upper plate, and
the knife is moved up and down together with the moving plate integrally.

12. The trimming device according to claim 11, **characterized by** comprising
a plurality of support columns supporting the upper plate in parallel with respect to the lower plate, and a guide member fixedly provided on the upper and lower portions of the moving plate, and thus guiding the up-and-down movement of the moving plate along the support columns penetrating the moving plate.

13. The trimming device according to claim 11, **characterized in that**
the cutting module comprises a knife fixing member coupled to the moving plate and penetrating the lower plate to extend vertically downward toward the guide roll.

14. The trimming device according to claim 13, **characterized in that**
the knife is mounted on one side of the knife fixing member, and a motor causing rotation drive of the knife is mounted on the other side of the knife fixing member.

15. The trimming device according to claim 14, **characterized in that**
the knife and the motor are medially placed in a vertical projection domain of the lower plate.

16. The trimming device according to claim 11, **characterized in that**
the adjustment member is provided to adjust the gap between the terminal of the knife and the guide roll by adjusting the height of the moving plate with respect to the lower plate.

17. The trimming device according to claim 16, **characterized in that**
the adjustment member is
a micro gauge including a main body fixedly coupled to the moving plate forming a reference surface; and
a measuring rod provided to be movable up and down by penetrating the moving plate in the main body.

18. The trimming device according to claim 8, **characterized by** comprising
a displacement sensor (LVDT) sensing the gap between the terminal of the knife and the guide roll using a position of a gauge head located on the same height and the same line as the terminal of the knife as a reference point.

19. A trimming device comprising:
a pair of vertical frames;
a trimming roll rotatably provided between the pair of vertical frames, transferring an electrode, and supporting the electrode on which a trimming process is performed;
a horizontal frame provided to be fixed between the pair of vertical frames above the trimming roll and having an opening corresponding to the longitudinal direction of the trimming roll;
a moving block provided to be capable of sliding movement and fixation in the longitudinal direction of the trimming roll in the front and rear of the opening; and
a cutting module performing the trimming process by cutting an edge of an active material layer of the electrode, wherein
the cutting module comprises:
a lower plate mounted and fixed on the moving block in the upper portion of the moving block;
a moving plate provided above the lower plate;
a knife fixing member provided on the moving plate and penetrating the lower plate and the opening by extending downward;
a knife mounted on the knife fixing member, and thus cutting the edge of the active material layer of the electrode in the upper portion of the electrode;
an adjustment member adjusting a gap between the terminal of the knife and the trimming roll by adjusting a gap between the moving plate and the lower plate; and
a laser pointer indicating a trimming position by generating a laser point at the trimming position.

20. The trimming device according to claim 19, **characterized by** comprising
a position adjustment device adjusting the trimming position by moving the mounting position of the cutting module from side to side.
